# EUROPEAN PATENT SPECIFICATION

(11) **EP 2 723 940 B1**
(45) Date of publication and mention of the grant of the patent: **27.12.2017**
(21) Application number: 12802022.9
(22) Date of filing: 20.06.2012
(51) Int. Cl.: B02C 19/00, C08B 15/00, D21D 1/20, D21D 1/30

(54) **METHOD AND APPARATUS FOR FIBRILLATION OF CELLULOSE CONTAINING MATERIALS**
VERFAHREN UND VORRICHTUNG ZUR FIBRILLIERUNG VON CELLULOSEHALTIGEN MATERIALIEN
PROCÉDÉ ET APPAREIL DE FIBRILLATION DE MATÉRIAUX CELLULOSIQUES

(30) Priority: 23.06.2011 FI 20115667
(43) Date of publication of application: 30.04.2014
(73) Proprietor: UPM-Kymmene Corporation, 00100 Helsinki (FI)
(72) Inventor: BJÖRKQVIST, Tomas, 33530 Tampere (FI); KOSKINEN, Timo, 02130 Espoo (FI); NUOPPONEN, Markus, 00550 Helsinki (FI); VEHNIÄINEN, Annikki, 00420 Helsinki (FI); FREDRIKSON, Antti, 02480 Kirkkonummi (FI); GUSTAFSSON, Helmer, deceased (FI)
(74) Representative: Berggren Oy, Tampere
(86) International application number: PCT/FI2012/050642
(87) International publication number: WO 2012/175806

(56) References cited:
- WO-A1-2012/089930
- AT-B- 393 520
- DE-A1- 19 603 548
- JP-A- H02 200 763
- JP-A- H02 200 763
- JP-A- 2007 100 246
- JP-A- 2007 100 246
- US-A- 4 023 739
- US-A- 4 023 739
- US-A- 4 951 888
- US-A- 4 951 888
- US-A- 5 868 330
- US-A- 5 868 330

## Description

### Field of the invention

This invention relates to a method for producing cellulose, wherein cellulose based fibre raw material is processed mechanically to separate microfibrils. The invention also relates to an apparatus for preparing nanocellulose.

In the refining of lignocellulose-containing fibres by, for example, a disc refiner or a conical refiner at a low consistency of about 3 to 4%, the structure of the fibre wall is loosened and fibrils or so-called fines are detached from the surface of the fibre. The formed fines and flexible fibres have an advantageous effect on the properties of most paper grades. In the refining of pulp fibres, however, the aim is to retain the length and strength of the fibres. In post-refining of mechanical pulp, the aim is partial fibrillation of the fibres by making the thick fibre wall thinner by refining, for detaching fibrils from the surface of the fibre.

JP02200763 discloses a grooved grinding surface of a refiner for dissociating and crushing pulp fibers. A sprayed deposit of carbide-metal cermet is provided on the surface of the grinding surface of a member for refiner to improve the corrosion resistance and wear resistance.

Lignocellulose-containing fibres can also be totally disintegrated into smaller parts by detaching fibrils which act as components in the fibre walls, wherein the particles obtained become significantly smaller in size. The properties of so-called fibril cellulose thus obtained differ significantly from the properties of normal pulp. It is also possible to use fibril cellulose as an additive in papermaking and to increase the internal bond strength and tensile strength of the paper product, as well as to increase the compactness of the paper. Fibril cellulose also differs from pulp in its appearance, because it is gel-like material in which the fibrils are present in a water dispersion. Because of the properties of fibril cellulose, it has become a desired raw material, and products containing it would have several uses in industry, for example as an additive in various compositions.

Fibril cellulose can be isolated as such directly from the fermentation process of some bacteria (including *Acetobacter xylinus).* However, in view of largescale production of fibril cellulose, the most promising potential raw material is raw material derived from plants and containing cellulose fibres, particularly wood and fibrous pulp made from it. The production of fibril cellulose from pulp requires the decomposition of the fibres further to the size class of fibrils. In processing, a cellulose fibre suspension is run several times through a homogenization step that generates high shear forces in the material. This can be achieved by guiding the suspension under high pressure repeatedly through a narrow opening where it achieves a high speed. It is also possible to use refiner discs, between which the fibre suspension is introduced several times.

In practice, the production of fibril cellulose from cellulose fibres of the conventional size class can, at present, only be implemented by disc refiners of laboratory scale, which have been developed for the needs of food industry. This technique requires several refining runs in succession, for example 2 to 5 runs, to obtain the size class of nanocellulose. The method is also poorly scalable up to industrial scale.

With the refining surfaces of a disc refiner, the aim is to convey the refining work to the material to be treated by means of hard particles, "grits", attached to the surface. When trying to produce fibres of a small size class, such as the size class of fibril cellulose, the problem is particularly that the efficiency of the refining work carried out by the surfaces is poor, if the refining gap is wide. On the other hand, if the refining gap is made narrower, the hard grits used in the refining, placed at varying heights in the adhesive of the surface, due to the manufacturing method, are easily worn out or detached. Thus, in practice, the grits are abraded to the basic level of the refining surface or, when detached, leave large pits on the refining surface, wherein points of larger clearance are formed in the refining gap, in which the fibres avoid the refining work.

JP2007100246 discloses a method for carrying out pretreatment of a fiber raw material by which cellulose microfibril can efficiently be produced from a fiber raw material consisting essentially of a wood pulp and/or a cellulosic fiber. A grinding machine is used equipped with abrasive grain plates mutually opposed and constituted so that a material to be ground fed to a space between abrasive grain plates is ground by rotating at least either one abrasive grain plate.

Due to the large size of the grits used, the surface roughness also becomes so great that free spaces are left on the refining surface which do not process the fibres.

### Summary of the invention

It is an aim of the invention to present a method for fibrillation of cellulose-containing materials, particularly for producing fibril cellulose, by which a better refining efficiency is achieved per unit area of refining surface, and abrasion of the surface can be avoided. For achieving this aim, the method according to the invention is primarily characterized in that the fibres to be refined are subjected to the action of a surface roughness Ra produced by grits elevated from the refining surface, said surface roughness being smaller than 3 µm, advantageously smaller than 2 µm. The refining is preferably performed in a refining gap, whose opposite surfaces have the above defined structure.

Advantageously, the surface roughness Ra on the refining surface is between 0.5 and 1 µm.

With such a "micro roughness" and sharp-cornered grits distributed sufficiently evenly and densely, providing sufficiently hard leading edges of particles in the direction of movement of the refining surface, it is possible to avoid too large a free volume, through which the fibres could pass and avoid the refining work.

In practice, the above described method can be implemented in different refiners, in which the refining gap can be provided between two relatively movable refining surfaces equipped with the above described "micro roughness". Normally, one of the surfaces is static and the other surface is movable for implementing the above-mentioned relative movement.

In an embodiment, the fibre suspension to be processed is introduced into the refining gap by applying a constant volume supply, and for setting the refining gap optimally in view of the refining work, closing force is applied to the gap. When a constant volume supply is used, which can be implemented *e*.*g*. with a positive displacement pump, a given volumetric flow (output) is always obtained, and as a second variable it is possible to use a gap-closing force produced by an external actuator.

The apparatus according to the invention is, in turn, characterized in that the refining surface delimiting the refining gap has a surface roughness Ra provided by elevated grits on the surface, said surface roughness being smaller than 3 µm, advantageously smaller than 2 µm.

Advantageously, the surface roughness Ra of the refining surface is between 0.5 and 1 µm.

Most advantageously, both of the refining surfaces delimiting the refining gap have the above defined structure. They can have, for example, exactly the same surface roughness Ra.

The grits consist of densely placed hard sharp-cornered particles which provide high leading edges advancing with the movement of the refining surface. The particle size of the particles is smaller than 10 µm. The particles can consist of carbide, for example tungsten carbide.

According to an advantageous embodiment of the apparatus, it comprises a fixed displacement pump for feeding the fibre suspension to be processed into the refining gap, as well as an actuator for setting the refining gap by means of the force generated by the actuator.

The shape of the refiner itself can vary. It can be a disc refiner type apparatus, in which the gap between the refining surfaces extends in the radial direction from the axis of rotation of the refiner disc, or a conical refiner type apparatus, in which the gap is formed between conical refining surfaces.

The apparatus can also comprise several refining zones functioning simultaneously and formed by refining gaps of the above described type, in which zones the same pulp to be processed is supplied in parallel, to increase the capacity. The refining surfaces of these refining zones can be coupled mechanically to the same rotation shaft (driving shaft), by which the energy required for refining is introduced into the refining gaps. Pulp to be processed can be supplied to each refining zone with a fixed displacement pump of its own. The refining surfaces of all the refining zones are advantageously similar in surface roughness.

### Brief description of the drawings

The invention will be described in the following with reference to the appended drawings, in which:
- Fig. 1: shows a refining gap and the refining surfaces delimiting the same, in a cross-sectional view,
- Fig. 2: is a scanning electron microscope image of a refining surface provided with a carbide coating,
- Fig. 3: shows schematically an advantageous embodiment of the apparatus,
- Fig. 4: is a light microscope image of a product produced by the method,
- Figs 5 and 6: show the dependence of properties of fibril celluloses obtained by the method on the refining energy, and
- Figs 7 and 8: show the effect of surface roughness in refining.

### Detailed description of the invention

In this application, fibril cellulose refers to cellulose microfibrils or microfibril bundles separated from cellulose based fibre raw material. These fibrils are characterized by a high aspect ratio (length/diameter): their length may exceed 1 µm, whereas the diameter typically remains smaller than 200 nm. The smallest fibrils are in the size class of so-called elementary fibrils, where the diameter is typically 2 to 12 nm. The dimensions and size distribution of the fibrils depend on the refining method and efficiency. Fibril cellulose can be characterized as a cellulose based material, in which the median length of particles (fibrils or fibril bundles) is not greater than 10 µm, for example between 0.2 and 10 µm, advantageously not greater than 1 µm, and the particle diameter is smaller than 1 µm, suitably ranging from 2 nm to 200 nm. Fibril cellulose is characterized by a large specific surface area and a strong ability to form hydrogen bonds. In water dispersion, fibril cellulose typically appears as either light or almost colourless gel-like material. Depending on the fibre raw material, fibril cellulose may also contain small amounts of other wood components, such as hemicellulose or lignin. Often used parallel names for fibril cellulose include nanofibrillated cellulose (NFC), which is often simply called nanocellulose, and microfibrillated cellulose (MFC).

In this application, the term "refining" generally refers to comminuting material mechanically by work applied to the particles, which work may be grinding, crushing or shearing, or a combination of these, or another corresponding action that reduces the particle size. The energy taken by the refining work is normally expressed in terms of energy per processed raw material quantity, in units of e.g. kWh/kg, MWh/ton, or units proportional to these.

The refining is performed at a low consistency for the mixture of fibre raw material and water, the fibre suspension. Hereinbelow, the term pulp will also be used for the mixture of fibre raw material and water subjected to refining. The fibre raw material subjected to refining may refer to whole fibres, parts separated from them, fibril bundles, or fibrils, and typically the pulp is a mixture of such elements, in which the ratios between the components are dependent on the stage of refining.

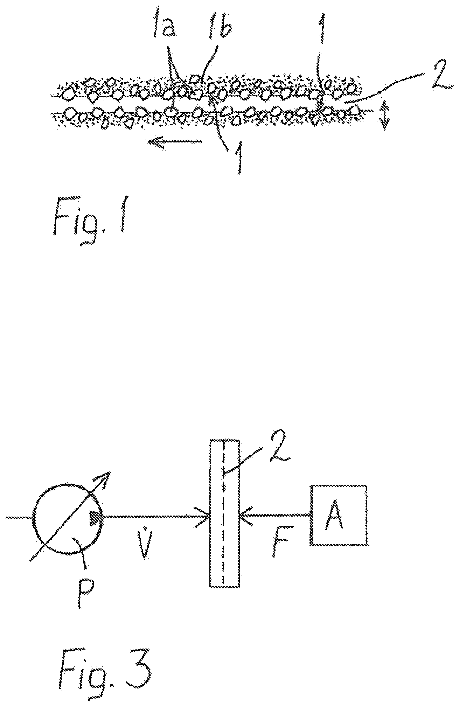

Figure 1 shows a refining gap 2 which is formed between two opposite refining surfaces 1. The refining surfaces 1 are formed by spraying hard particles 1a and binder 1b onto a substrate. The hard particles consist of, for example, carbide, whose particle size may be between 1 and 3 µm. The binder 1b is a metallic binder which resists well mechanical stress and keeps the particles 1b well in place. The movement of one of the refining surfaces is indicated with an arrow.

One possible coating which does not, however, limit the invention, is a tungsten carbide (WC) / cobalt chrome (10Co-4Cr) coating, in which the latter component acts as a binder. By the ratio of the hard particles (grit) and the binder, it is possible to affect the grit density on the refining surface.

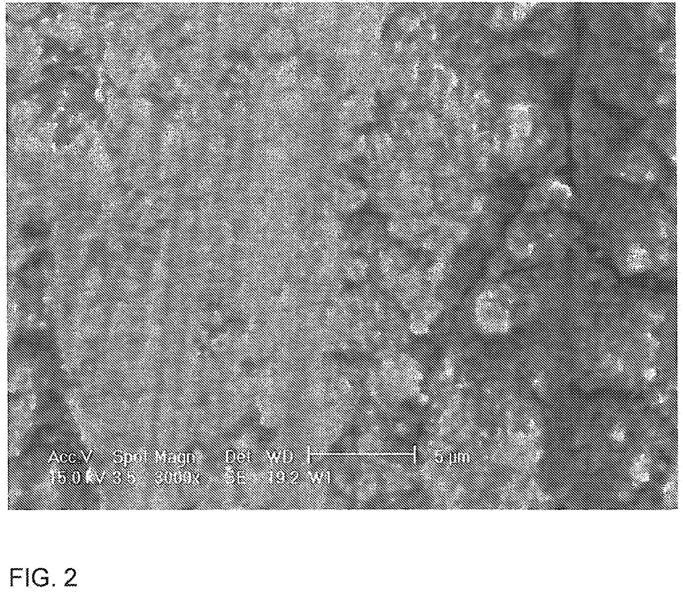

The refining surface 1 can be advantageously formed by spraying a mixture containing grits and binder in a suitable ratio onto a substrate. Figure 2 shows a microscopic image of refining surfaces obtained by spraying tungsten carbide / cobalt chrome. The grit particles are visible as light spots.

The particles are as uniform in size as possible, wherein spraying by a suitable spraying method provides a micro coarseness of the surface, which is determined primarily according to the size of the grit particles which rise substantially onto the same level on the surface. As a rule of thumb, it can be said that the surface roughness Ra is about half the particle size of the grits.

Thanks to the small particle size, detachment of single particles does not leave large pits, impairing the refining efficiency, on the refining surface, and the surface roughness remains on a constant level.

If necessary, the surface roughness can be reduced to a desired level by wearing new surfaces against each other, for example by running only water through the refining gap.

The Ra value is measured by a known method with a stylus profilometer, and it is the arithmetic mean value of absolute values of profile deviations from the mean value line of the profile.

Figure 3 shows an advantageous feeding solution for supplying pulp. The pump used for feeding pulp to the refiner is advantageously a fixed displacement pump P, and a body acting as the substrate for the second refining surface 1 (for example a rotating rotor) is loaded in the direction of closing the refining gap 2 by an actuator A that generates a given force F. The pump P produces a constant volumetric flow (volume of pulp to be refined per time) independent of the pressure. It is possible to use known fixed displacement pumps which operate on the positive displacement principle, such as piston pumps and eccentric screw pumps. Thus, the pulp to be refined is, in a way, positively fed through the refiner (the refining gap). In this way, a homogeneous flow through the refining gap of the refiner is achieved, which flow is independent of fluctuations in the consistency and refining of the pulp, as well as a steady counterforce for the force tending to close the refining gap. The constant volumetric flow generated by the pump P is advantageously adjustable; that is, it can be set to a desired level, for example by changing the displacement volume.

The load generated by the actuator A can be based on the pressure of pressurized air or liquid, wherein the load can be measured directly by measuring the pressure of such a medium. The aim is to keep this pressure constant during the refining. The loading actuator A can be coupled, for example, to the rotating shaft of the rotor of the refiner by known mechanical solutions for transmitting a linear movement to the shaft.

Pulp supply by the principle of constant volumetric flow, combined with the force closing the gap and sufficiently smooth (low roughness) surfaces provides a very narrow and uniform gap without direct contact of the refining surfaces. Transient fluctuations in the properties of the pulp supplied are reflected primarily as pressure fluctuations in the supply, which does not substantially disturb the refining. The gap is formed by opposite disc-shaped or conical refining surfaces to have a substantially uniform width so that the refining zone does not comprise a blade grooving or the like which would reduce the surface carrying out the refining work by which the grit affects the fibres.

One variable by which it is also possible to influence the refining result is the speed of motion of the refining surface, which can be changed to change the amount of refining energy introduced in the pulp.

The arrangement shown in Fig. 3 can also be implemented in the form of several parallel refining gaps 2 or refining zones, to which pulp is supplied from the same source with separate fixed volume pumps P. Each refining gap can be closed by an actuator A of its own. In this way, the gaps can be set irrespective of each other so that the refining results in the different refining gaps are as equal as possible. The refining zones can also be implemented by providing several separate annular refining zones between the rotor and stator, each having separate pulp input and output so that the pulp to be refined is passed in parallel through the different refining zones, and each pulp portion to be supplied is passed through only one zone. Consequently, the refining gap of such a refiner comprises separate zones in the radial direction, but the refining surfaces can be similar in the different zones. Pulp to be processed can be supplied to the different zones of such a refiner simultaneously by the same fixed volume pump, and the same actuator can be used for adjusting the force closing the gap (commonly for all the zones).

The pulp to be supplied for refining is a mixture of water and fibre material where the fibres have been separated from each other in the preceding manufacturing processes of mechanical pulp or chemical pulp, where the starting material is preferably wood raw material. In the manufacture of fibril cellulose, it is also possible to use cellulosic fibres from other plants, where cellulose fibrils are separable from the fibre structure. A suitable consistency of the low-consistency pulp to be refined is 1.5 to 4.5%, preferably 2 to 4% (weight/weight). The pulp is thus sufficiently dilute so that the starting material fibres can be supplied evenly and in sufficiently swollen form to open them up and to separate the fibrils.

The cellulose fibres of the pulp to be supplied may also be pre-processed enzymatically or chemically, for example to reduce the quantity of hemicellulose. Furthermore, the cellulose fibres may be chemically modified, wherein the cellulose molecules contain functional groups other than in the original cellulose. Such groups include, for example, carboxyl groups or quaternary ammonium (cationic pulp).

### Description of a product made by the method.

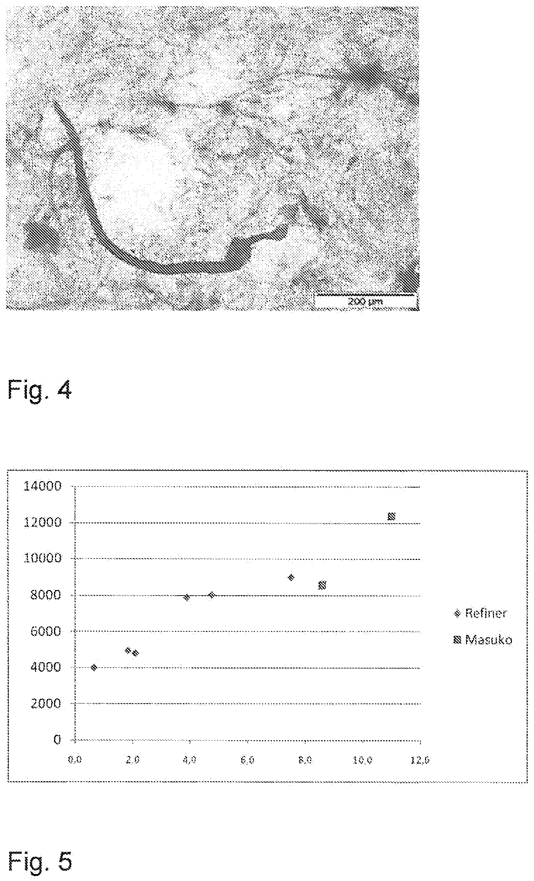

Fibril cellulose suspension is a gel with strongly shear thinning properties. Typically, its viscosity is measured by a Brookfield viscometer. Complete fibrillation of the fibres takes place as a function of energy consumption, and the proportion of non-degraded pieces of fibre wall contained in fibril cellulose is measured by, for example, a Fiberlab device. Figure 4 shows a light microscope image of fibril cellulose where fibrils of different sizes are visible.

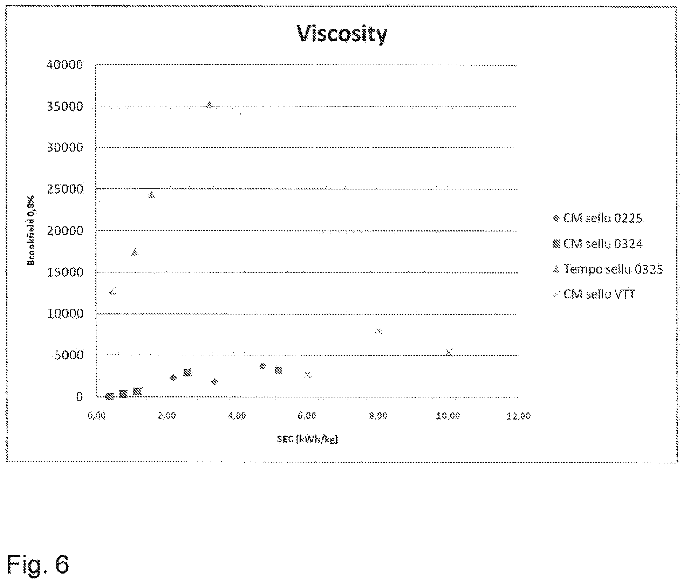

As an example of fibril cellulose made by applying constant volumetric supply, Figs. 5 and 6 show the development of properties of fibril cellulose made by unprocessed cellulose fibres and chemically processed cellulose fibres, as a function of energy consumption. Figure 5 shows viscosity values of fibril celluloses made of unprocessed cellulose fibres (Brookfield viscosity at a consistency of 1.5%) as a function of energy consumption (specific energy consumption, SEC). The viscosity unit is mPa·s and the energy unit is kWh/kg. Points "Refiner" indicate results obtained by the method and points "Masuko" indicate results obtained with a known refiner. Figure 6 shows viscosity values of fibril celluloses made of chemically preprocessed pulps (Brookfield viscosity at a consistency of 0.8%) as a function of energy consumption. The units are the same as in Fig. 5. CM pulp refers to different carboxymethylated pulps, and TEMPO pulp refers to pulp obtained by catalytic oxidation and containing carboxyl groups.

As shown in the figures, fibril cellulose can be obtained by refining, whereby the viscosity of the aqueous dispersion of the pulp increases as a function of the specific energy (energy consumption), that is, as the specific energy used for refining increases. Consequently, the viscosity of the product and the specific energy used in the method have a positive correlation. It has also been found that fibril cellulose can be obtained by refining, whereby the turbidity and the content of fibre particles reduces as a function of specific energy (energy consumption).

Typically in the method, the aim of low-consistency refining of pulp is to obtain fibril cellulose whose Brookfield viscosity, measured at a consistency of 0.8%, is at least 5,000 mPa·s. In the case of pulp which has been oxidized catalytically before the refining (pulp containing carboxyl groups), for example oxidized by means of TEMPO catalyst, the aim is to obtain fibril cellulose whose Brookfield viscosity, measured at a consistency of 0.8%, is at least 15,000 mPa·s. In addition to the high viscosity, the aqueous fibril cellulose dispersions obtained are also characterized by so-called shear thinning; that is, the viscosity decreases as the shear rate increases.

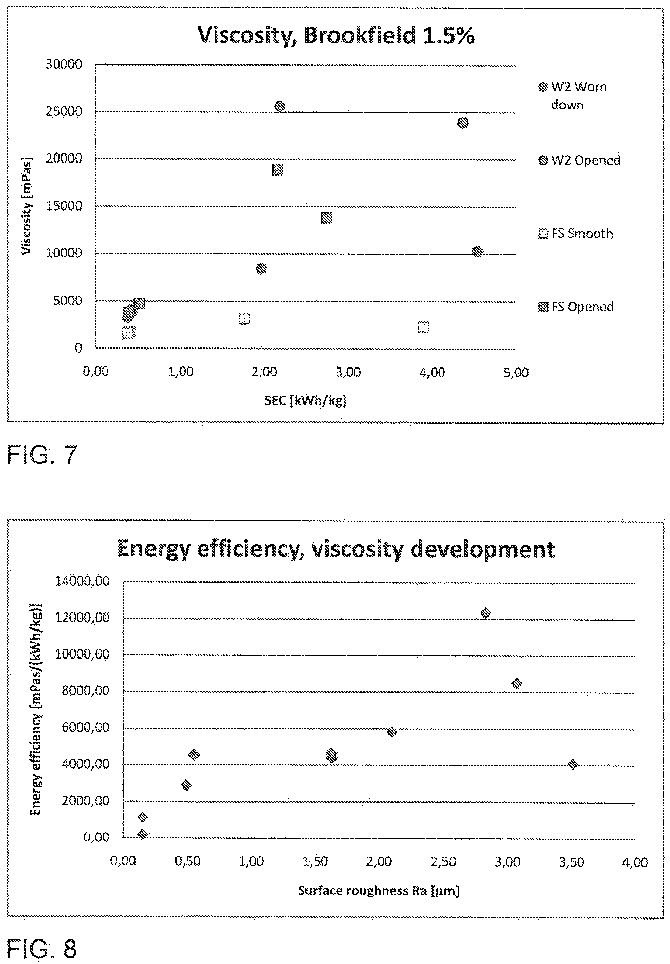

Figure 7 shows the development of the viscosity of fibril cellulose in refining as a function of energy consumption, with different refining surfaces. The energy consumption is expressed as specific energy of refining (SEC), in kWh/kg, and the viscosity as Brookfield viscosity, in mPa·s, at a measuring consistency of 1.5%, at 10 rpm. The starting material was unprocessed pulp in which the cellulose was in its original chemical form. Two different surfaces (FS and W2) formed of carbide grits and binder were used as refining surfaces with a low surface roughness (Ra lower than 0.5), that is, as "smooth" surfaces which were obtained by wearing the surfaces against each other (W2 worn down) or abrading them smooth (FS smooth). Surfaces coarser than these (W2 opened, FS opened) were obtained by opening said surfaces by sandblasting. In this way, surfaces were obtained, whose surface roughness Ra was typically in the range from 1 to 4 µm. In the refining, constant volumetric feeding was used, and the refining gap was closed with a constant force (axial force closing the gap). Similar refining surfaces were provided on both sides of the gap.

All refining surfaces were first used for gentle mixing refining at a low specific energy, by which the fibre pulp was first homogenized (fibre aggregates were disintegrated), wherein the specific energy was lower than 0.6 kWh/kg and the viscosity remained lower than 5,000 mPa·s (points in the lower left corner of the graph). Two successive actual fibrillating refining runs (uppermost circles) were performed by the refining surface "W2 opened" (measured Ra = 2.83 µm). On the first run through, the viscosity exceeded 25,000 mPa·s, whereas the second run had no longer any effect and the viscosity obtained even decreased slightly. One run was performed on each of the two refining surfaces with different surface roughness, "FS opened" (gentle mixing refining and actual fibrillating refining), the two uppermost squares indicating their end points in the graph. With the surface roughness value Ra of 3.07 µm, a viscosity of about 18,000 to 20,000 mPa·s was obtained, whereas with the surface roughness value of 3.51 µm, the final viscosity was 13,000 to 15,000 mPa·s. With the smooth refining surface "W2 worn down" (Ra = 0.49 µm), two successive actual refining runs were performed, in which the viscosity remained at a level of about 10,000 mPa·s. With the smooth refining surfaces "FS smooth" (Ra = 0.15 µm), two runs were performed, in which the final viscosity remained lower than 4,000 mPa·s.

Figure 7 shows that with a total specific energy of 2.00 to 3.00 kWh per kg of pulp (including possible mixing preliminary refining and actual fibrillating refining), it is possible to achieve a viscosity range of 13,000 to 27,000 mPa·s (Brookfield, 1.5% consistency, 10 rpm), advantageously a range of 15,000 to 27,000, which is a relatively good result in view of efficiency.

Figure 8 illustrates the energy efficiency of fibrillating refining at different surface roughness values. The energy efficiency was obtained by dividing the viscosity increase of the actual fibrillating refining by the specific energy required by this step, unit mPa·s/(kWh/kg). The viscosity was Brookfield viscosity at a consistency of 1.5%, at 10 rpm. The three last points on the horizontal axis represent the points "W2 opened" (Ra 2.83 µm) and "FS opened" (Ra = 3.07 µm and Ra = 3.51 µm) in Fig. 7. By the method, an energy efficiency higher than 4,000 mPa·s/(kWh/kg), advantageously a value higher than 5,000 mPa·s/(kWh/kg), can be easily achieved.

## Claims

1. A method for manufacturing fibril cellulose, wherein a cellulose based fibre raw material is processed mechanically in a refining gap (2) for separating fibrils, wherein the fibres to be refined are subjected to the action of a surface roughness Ra provided by grits (1a) elevated from a refining surface (1) delimiting the refining gap (2), said surface roughness being lower than 3 µm, advantageously lower than 2 µm.

2. The method according to claim 1, **characterized in that** the fibres to be refined are subjected to the action of a surface roughness Ra provided by grits (1a) elevated from both refining surfaces (1) delimiting the refining gap (2), said surface roughness being lower than 3 µm, advantageously lower than 2 µm

3. The method according to claim 1 or 2, **characterized in that** the surface roughness Ra in the refining surface or refining surfaces (1) is between 0.5 and 1 µm.

4. The method according to any of the preceding claims, **characterized in that** the pulp to be refined is supplied into the refining gap (2) by applying constant volumetric supply, and a closing force for the gap is applied for setting the refining gap (2).

5. The method according to any of the preceding claims, **characterized in that** the pulp to be refined is supplied into several refining gaps (2) in parallel, advantageously by applying constant volumetric supply to each of the refining gaps.

6. An apparatus for manufacturing fibril cellulose, comprising refining zones comprising refining surfaces (1), and a refining gap (2) formed between them, as well as means for supplying pulp to be refined into the refining gap, **characterized in that** the refining zones do not comprise a blade grooving and that at least one refining surface (1) delimiting the refining gap (2) has a surface roughness Ra provided by grits (1a) elevated from the surface, said surface roughness being lower than 3 µm, advantageously lower than 2 µm.

7. The apparatus according to claim 6, **characterized in that** both refining surfaces (1) delimiting the refining gap (2) have a surface roughness Ra provided by grits (1a) elevated from the surface, said surface roughness being lower than 3 µm, advantageously lower than 2 µm.

8. The apparatus according to claim 6 or 7, **characterized in that** the surface roughness Ra of the refining surface or refining surfaces (1) is between 0.5 and 1 µm.

9. The apparatus according to any of the preceding claims 6 to 8, **characterized in that** the refining surface or refining surfaces (1) are formed by spraying grits and binder onto a substrate.

10. The apparatus according to any of the preceding claims 6 to 8, **characterized in that** the means for supplying pulp to be refined to the refining gap is a fixed volume pump (P), and the apparatus comprises an actuator (A) for setting the refining gap (2) by means of a force generated by the actuator (A).

11. The apparatus according to any of the preceding claims 6 to 8, **characterized in that** it comprises several refining zones formed by a refining gap (2), and means for supplying pulp to the different zones in parallel.

## Patentansprüche

1. Verfahren zur Herstellung von Fibrillen-Cellulose, wobei ein cellulosebasierter Faserrohstoff mechanisch in einem Mahlspalt (2) zum Trennen von Fibrillen verarbeitet wird, wobei die zu mahlenden Fasern der Einwirkung einer Oberflächenrauheit Ra unterzogen werden, die von Körnern (1a) bereitgestellt wird, die von einer Mahloberfläche (1) erhaben sind, die den Mahlspalt (2) begrenzt, wobei die Oberflächenrauheit weniger als 3 µm, vorteilhafterweise weniger als 2 µm beträgt.

2. Verfahren nach Anspruch 1, **dadurch gekennzeichnet, dass** die zu mahlenden Fasern der Einwirkung einer Oberflächenrauheit Ra unterzogen werden, die von Körnern (1a) bereitgestellt wird, die von beiden Mahloberflächen (1) erhaben sind, die den Mahlspalt (2) begrenzen, wobei die Oberflächenrauheit weniger als 3 µm, vorteilhafterweise weniger als 2 µm beträgt.

3. Verfahren nach Anspruch 1 oder 2, **dadurch gekennzeichnet, dass** die Oberflächenrauheit Ra in der Mahloberfläche oder den Mahloberflächen (1) zwischen 0,5 und 1 µm liegt.

4. Verfahren nach einem der vorhergehenden Ansprüche, **dadurch gekennzeichnet, dass** die zu mahlende Pulpe in den Mahlspalt (2) durch Anwenden einer konstanten volumetrischen Zuführung zugeführt wird und eine Schließkraft für den Spalt zum Einstellen des Mahlspalts (2) angewendet wird.

5. Verfahren nach einem der vorhergehenden Ansprüche, **dadurch gekennzeichnet, dass** die zu mahlende Pulpe parallel in mehrere Mahlspalte (2) zugeführt wird, vorteilhafterweise durch Anwenden einer konstanten volumetrischen Zuführung zu jedem der Mahlspalte.

6. Vorrichtung zur Herstellung von Fibrillen-Cellulose, umfassend Mahlzonen, die Mahloberflächen (1) und einen dazwischen gebildeten Mahlspalt (2) umfassen, sowie ein Mittel zur Zuführung einer zu mahlenden Pulpe in den Mahlspalt, **dadurch gekennzeichnet, dass** die Mahlzonen keine Messernuten umfassen und dass mindestens eine Mahloberfläche (1), die den Mahlspalt (2) begrenzt, eine Oberflächenrauheit Ra aufweist, die von Körnern (1a) bereitgestellt wird, die von der Oberfläche erhaben sind, wobei die Oberflächenrauheit weniger als 3 µm, vorteilhafterweise weniger als 2 µm beträgt.

7. Vorrichtung nach Anspruch 6, **dadurch gekennzeichnet, dass** beide Mahloberflächen (1), die den Mahlspalt (2) begrenzen, eine Oberflächenrauheit Ra aufweisen, die von Körnern (1a) bereitgestellt wird, die von der Oberfläche erhaben sind, wobei die Oberflächenrauheit weniger als 3 µm, vorteilhafterweise weniger als 2 µm beträgt.

8. Vorrichtung nach Anspruch 6 oder 7, **dadurch gekennzeichnet, dass** die Oberflächenrauheit Ra der Mahloberfläche oder der Mahloberflächen (1) zwischen 0,5 und 1 µm liegt.

9. Vorrichtung nach einem der vorhergehenden Ansprüche 6 bis 8, **dadurch gekennzeichnet, dass** die Mahloberfläche oder die Mahloberflächen (1) durch Sprühen von Körnern und Bindemittel auf ein Substrat gebildet werden.

10. Vorrichtung nach einem der vorhergehenden Ansprüche 6 bis 8, **dadurch gekennzeichnet, dass** das Mittel zur Zuführung einer zu mahlenden Pulpe zu dem Mahlspalt eine Festvolumenpumpe (P) ist und die Vorrichtung ein Betätigungselement (A) zum Einstellen des Mahlspalts (2) mittels einer Kraft, die von dem Betätigungselement (A) erzeugt wird, umfasst.

11. Vorrichtung nach einem der vorhergehenden Ansprüche 6 bis 8, **dadurch gekennzeichnet, dass** sie mehrere Mahlzonen, die von einem Mahlspalt (2) gebildet werden, und ein Mittel zum Zuführen einer Pulpe parallel zu den unterschiedlichen Zonen umfasst.

## Revendications

1. Procédé de fabrication de cellulose fibrillaire, dans lequel une matière première fibreuse à base de cellulose est traitée mécaniquement dans un espace de raffinage (2) pour séparer les fibrilles, dans lequel les fibres à raffiner sont soumises à l'action d'une rugosité de surface Ra fournie par des grains (1a) élevés à partir d'une surface de raffinage (1) délimitant l'espace de raffinage (2), ladite rugosité de surface étant inférieure à 3 µm, avantageusement inférieure à 2 µm.

2. Procédé selon la revendication 1, **caractérisé en ce que** les fibres à raffiner sont soumises à l'action d'une rugosité de surface Ra fournie par des grains (1a) élevés à partir des deux surfaces de raffinage (1) délimitant l'espace de raffinage (2) ladite rugosité de surface étant inférieure à 3 µm, avantageusement inférieure à 2 µm.

3. Procédé selon la revendication 1 ou 2, **caractérisé en ce que** la rugosité de surface Ra dans la surface de raffinage ou les surfaces de raffinage (1) est comprise entre 0,5 et 1 µm.

4. Procédé selon l'une quelconque des revendications précédentes, **caractérisé en ce que** la pâte à raffiner est alimentée dans l'espace de raffinage (2) par application d'une alimentation volumétrique constante, et une force de fermeture de l'espace est appliquée pour régler l'espace de raffinage (2).

5. Procédé selon l'une quelconque des revendications précédentes, **caractérisé en ce que** la pâte à raffiner est alimentée en parallèle dans plusieurs espaces de raffinage (2), avantageusement par application d'une alimentation volumétrique constante à chacun des espaces de raffinage.

6. Appareil de fabrication de cellulose fibrillaire comprenant des zones de raffinage comprenant des surfaces de raffinage (1), et un espace de raffinage (2) formé entre celles-ci, ainsi qu'un moyen pour alimenter la pâte à raffiner dans l'espace de raffinage, **caractérisé en ce que** les zones de raffinage ne comportent pas de rainurage de lame et qu'au moins une surface de raffinage (1) délimitant l'espace de raffinage (2) présente une rugosité de surface Ra fournie par des grains (1a) élevés à partir de la surface, ladite rugosité de surface étant inférieure à 3 µm, avantageusement inférieure à 2 µm.

7. Appareil selon la revendication 6, **caractérisé en ce que** les deux surfaces de raffinage (1) délimitant l'espace de raffinage (2) présentent une rugosité de surface Ra fournie par des grains (1a) élevés à partir de la surface, ladite rugosité de surface étant inférieure à 3 µm, avantageusement inférieure à 2 µm.

8. Appareil selon la revendication 6 ou 7, **caractérisé en ce que** la rugosité de surface Ra de la surface de raffinage ou des surfaces de raffinage (1) est comprise entre 0,5 et 1 µm.

9. Appareil selon l'une quelconque des revendications 6 à 8 précédentes, **caractérisé en ce que** la surface de raffinage ou les surfaces de raffinage (1) sont formées par projection de grains et de liant sur un substrat.

10. Appareil selon l'une quelconque des revendications 6 à 8 précédentes, **caractérisé en ce que** le moyen pour alimenter la pâte à raffiner à l'espace de raffinage est une pompe à volume fixe (P), et l'appareil comprend un actionneur (A) pour régler l'espace de raffinage (2) au moyen d'une force générée par l'actionneur (A).

11. Appareil selon l'une quelconque des revendications 6 à 8 précédentes, **caractérisé en ce qu'**il comprend plusieurs zones de raffinage formées par un espace de raffinage (2), et un moyen pour l'alimentation en pâte des différentes zones en parallèle.
